(19)

**Europäisches Patentamt**
**European Patent Office**
**Office européen des brevets**

(11) **EP 4 759 856 A1**

(12) **EUROPEAN PATENT APPLICATION**
published in accordance with Art. 153(4) EPC

(43) Date of publication:
**17.06.2026  Bulletin 2026/25**

(21) Application number: **24851737.7**

(22) Date of filing: **01.08.2024**

(51) International Patent Classification (IPC):
**C08G 18/75** *(2006.01)*     **C08G 18/12** *(2006.01)*
**C08G 18/65** *(2006.01)*

(52) Cooperative Patent Classification (CPC):
**C08G 18/75**

(86) International application number:
**PCT/JP2024/027506**

(87) International publication number:
**WO 2025/033312 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.08.2023  JP 2023129188**

(71) Applicant: **Mitsui Chemicals, Inc.
Tokyo 104-0028 (JP)**

(72) Inventors:
• **TAGO, Hiroaki
  Sodegaura-shi, Chiba 299-0265 (JP)**
• **KOBAYASHI, Takeshi
  Sodegaura-shi, Chiba 299-0265 (JP)**

(74) Representative: **Hoffmann Eitle
Patent- und Rechtsanwälte PartmbB
Arabellastraße 30
81925 München (DE)**

(54) **POLYURETHANE ELASTOMER AND METHOD FOR PRODUCING POLYURETHANE ELASTOMER**

(57)    A polyurethane elastomer is a polyurethane elastomer that contains a reaction product of an isocyanate group-terminated prepolymer with a curing agent. The isocyanate group-terminated prepolymer contains a reaction product of a polyisocyanate component containing bis(isocyanatomethyl)cyclohexane with a polyol component containing a high molecular weight polyol and a low molecular weight polyol. The low molecular weight polyol contains a 1, 4-butanediol.

EP 4 759 856 A1

**Description**

TECHNICAL FIELD

The present invention relates to a polyurethane elastomer and a method of producing a polyurethane elastomer.

BACKGROUND ART

Polyurethane elastomers have excellent mechanical strength and excellent abrasion resistance, and are easy to process, and thus widely used in various industrial devices.

As the polyurethane elastomers described above, there has been proposed a polyurethane elastomer obtained, for example, by reacting 1,4-bis(isocyanatomethyl)cyclohexane with a polytetramethylene ether glycol to produce an isocyanate group-terminated prepolymer, and reacting the resulting isocyanate group-terminated prepolymer with a 1, 4-butanediol (see, for example, Example 1 of Patent Document 1 described below).

Citation List

Patent Document

Patent Document 1: Japanese Unexamined Patent Publication No. 2014-231585

SUMMARY OF THE INVENTION

PROBLEM TO BE SOLVED BY THE INVENTION

Meanwhile, polyurethane elastomers are required to have more excellent transparency depending on the use.

The present invention provides a polyurethane elastomer with excellent transparency, and a method of producing a polyurethane elastomer.

MEANS FOR SOLVING THE PROBLEM

The present invention [1] includes a polyurethane elastomer comprising: a reaction product of an isocyanate group-terminated prepolymer with a curing agent, wherein the isocyanate group-terminated prepolymer contains a reaction product of a polyisocyanate component containing bis(isocyanatomethyl)cyclohexane with a polyol component containing a high molecular weight polyol and a low molecular weight polyol, and wherein the low molecular weight polyol contains a 1, 4-butanediol.

The present invention [2] includes the polyurethane elastomer described in the above-described [1], wherein the high molecular weight polyol has a number average molecular weight of 400 or more, and wherein the low molecular weight polyol has a number average molecular weight of less than 400.

The present invention [3] includes the polyurethane elastomer described in the above-described [1] or [2], wherein the high molecular weight polyol has a number average molecular weight of 1200 or more and 3200 or less.

The present invention [4] includes the polyurethane elastomer described in any one of the above-described [1] to [3], wherein a content ratio of the low molecular weight polyol with respect to 100 parts by mass of the high molecular weight polyol is 0.05 parts by mass or more and 1.50 parts by mass or less.

The present invention [5] includes the polyurethane elastomer described in any one of the above-described [1] to [4], having a urethane group concentration of 1.3 mmol/g or more and 2.5 mmol/g or less.

The present invention [6] includes the polyurethane elastomer described in any one of the above-described [1] to [5], having a haze of 80% or less.

The present invention [7] includes the polyurethane elastomer described in any one of the above-described [1] to [6], wherein the curing agent contains a 1, 4-butanediol, and wherein a content ratio of the 1, 4-butanediol with respect to the curing agent is 80% by mass or more.

The present invention [8] includes a method of producing a polyurethane elastomer, the method comprising: a first step of reacting a polyisocyanate component with a polyol component to produce an isocyanate group-terminated prepolymer; and a second step of reacting the isocyanate group-terminated prepolymer with a curing agent to produce a polyurethane elastomer, wherein the polyisocyanate component contains bis(isocyanatomethyl)cyclohexane, wherein the polyol component contains a high molecular weight polyol and a low molecular weight polyol, and wherein the low molecular weight polyol contains a 1, 4-butanediol.

EFFECTS OF THE INVENTION

The polyurethane elastomer of the present invention contains a reaction product of the isocyanate group-terminated prepolymer with the curing agent. Then, the polyol component of the isocyanate group-terminated prepolymer contains a low molecular weight polyol. Furthermore, the low molecular weight polyol contains a 1, 4-butanediol. Therefore, the transparency can be improved.

The method of producing a polyurethane elastomer of the present invention includes the first step of reacting a polyisocyanate component with a polyol component to produce an isocyanate group-terminated prepolymer, and the second step of reacting the isocyanate group-terminated prepolymer with a curing agent to produce a polyurethane elastomer. Furthermore, the polyol component contains a low molecular weight polyol containing a 1, 4-butanediol. Therefore, the transparency can be improved.

DESCRIPTION OF THE EMBODIMENTS

A polyurethane elastomer is a polyurethane cured product containing a reaction product of an isocyanate group-terminated prepolymer with a curing agent.

<Isocyanate Group-terminated Prepolymer>

The isocyanate group-terminated prepolymer contains a reaction product of a polyisocyanate component with a polyol component. The isocyanate group-terminated prepolymer preferably consists of a reaction product of a polyisocyanate component with a polyol component.

[Polyisocyanate Component]

The polyisocyanate component contains bis(isocyanatomethyl)cyclohexane as an essential component.

Examples of the bis(isocyanatomethyl)cyclohexane include 1,3-bis(isocyanatomethyl)cyclohexane and 1,4-bis(isocyanatomethyl)cyclohexane. As the bis(isocyanatomethyl)cyclohexane, preferably 1,4-bis(isocyanatomethyl)cyclohexane is used.

The 1,4-bis(isocyanatomethyl)cyclohexane has cis-1,4-bis(isocyanatomethyl)cyclohexane and trans-1,4-bis(isocyanatomethyl)cyclohexane as stereoisomers. The total amount of the cis-1,4-bis(isocyanatomethyl)cyclohexane and trans-1,4-bis(isocyanatomethyl)cyclohexane is 100% by mole.

**In** the 1,4-bis(isocyanatomethyl)cyclohexane, a content ratio of the trans-1,4-bis(isocyanatomethyl)cyclohexane is, for example, 60% by mole or more, preferably 70% by mole or more, more preferably 80% by mole or more, even more preferably 85% by mole or more, and, for example, 99.8% by mole or less, preferably 99% by mole or less, more preferably 96% by mole or less, even more preferably 90% by mole or less.

Furthermore, in the 1,4-bis(isocyanatomethyl)cyclohexane, a content ratio of the cis-1,4-bis(isocyanatomethyl) cyclohexane is, for example, 0.2% by mole or more, preferably 1% by mole or more, more preferably 4% by mole or more, even more preferably 10% by mole or more, and, for example, 40% by mole or less, preferably 30% by mole or less, more preferably 20% by mole or less, even more preferably 15% by mole or less.

These bis(isocyanatomethyl)cyclohexanes can be used alone or in combination of two or more.

The content ratio of the bis(isocyanatomethyl)cyclohexane with respect to the polyisocyanate component is, for example, 80% by mass or more, preferably 90% by mass or more, more preferably 99% by mass or more, even more preferably 100% by mass.

The polyisocyanate component contains another polyisocyanate as an optional component.

Examples of the other polyisocyanate include an aliphatic polyisocyanate, an alicyclic polyisocyanate (except bis(isocyanatomethyl)cyclohexane), an aromatic polyisocyanate, and an araliphatic polyisocyanate.

Examples of the aliphatic polyisocyanate include an aliphatic diisocyanate. Examples of the aliphatic diisocyanate include 1,6-hexamethylene diisocyanate (1,6-HDI), 1,5-pentamethylene diisocyanate (1,5-PDI), tetramethylene diisocyanate, trimethylene diisocyanate, 1,2-, 2,3- or 1,3-butylene diisocyanate, and 2,4,4- or 2,2,4-trimethyl hexamethylene diisocyanate.

Examples of the alicyclic polyisocyanate include an alicyclic diisocyanate. Examples of the alicyclic diisocyanate include 3-isocyanatomethyl-3,5,5-trimethyl cyclohexyl isocyanate (isophorone diisocyanate, IPDI), 4,4'-, 2,4'- or 2,2'-methylene bis(cyclohexyl isocyanate) or a mixture thereof ($H_{12}$MDI), bis(isocyanatomethyl)norbornane (NBDI), 1,3-cyclopentene diisocyanate, 1,4-cyclohexane diisocyanate, 1,3-cyclohexane diisocyanate, methyl-2,4-cyclohexane diisocyanate, and methyl-2,6-cyclohexane diisocyanate.

Examples of the aromatic polyisocyanate include an aromatic diisocyanate. Examples of the aromatic diisocyanate include 4,4'-, 2,4'- or 2,2'-diphenylmethane diisocyanate or a mixture thereof (MDI), 2,4- or 2,6-tolylenediisocyanate or a mixture thereof (TDI), o-tolidine diisocyanate, 1,5-naphthalene diisocyanate (NDI), m- or p-phenylene diisocyanate or a mixture thereof, 4,4'-diphenyl diisocyanate, and 4,4'-diphenylether diisocyanate.

Examples of the araliphatic polyisocyanate include an araliphatic diisocyanate. Examples of the araliphatic diisocyanate include xylylene diisocyanate (1,2-, 1,3- or 1,4-xylylene diisocyanate or a mixture thereof ) (XDI), 1,3- or 1,4-tetramethyl xylylene diisocyanate or a mixture thereof (TMXDI), and ω,ω'-diisocyanate-1,4-diethylbenzene.

The content ratio of the other polyisocyanate with respect to the polyisocyanate component is, for example, 20% by mass or less, preferably 10% by mass or less, and, for example, 1% by mass or more.

These other polyisocyanates can be used alone or in combination of two or more.

Preferably, the polyisocyanate component does not contain another polyisocyanate, and consists of bis(isocyanatomethyl)cyclohexane.

[Polyol Component]

The polyol component contains a high molecular weight polyol and a low molecular weight polyol.

(High Molecular Weight Polyol)

The high molecular weight polyol is a macropolyol, and is a compound having two or more hydroxy groups.

The high molecular weight polyol has a number average molecular weight of, for example, 400 or more, preferably 500 or more, and from the viewpoint of reducing the viscosity of the isocyanate group-terminated prepolymer and improving the handleability thereof, more preferably 1200 or more, even more preferably 1400 or more, particularly preferably 1800 or more, and, for example, 10000 or less, preferably 5000 or less, and from the viewpoint of improving the transparency, more preferably 3200 or less, even more preferably 2500 or less.

The number average molecular weight can be obtained as a molecular weight in terms of polystyrene by a known gel permeation chromatography (hereinafter, the same applies).

Examples of the high molecular weight polyol include a polyether polyol, a polyester polyol, a polycarbonate polyol, a polyurethane polyol, an epoxy polyol, a vegetable oil polyol, a polyolefin polyol, an acrylic polyol, and a polymer polyol. As the high molecular weight polyol, preferably a polyether polyol and a polyester polyol are used.

Examples of the polyether polyol include a polyoxy (C2-3) alkylene polyol and a polytetramethylene ether polyol.

The polyoxy (C2-3) alkylene polyol is an addition polymerization product of alkylene oxide having 2 to 3 carbon atoms, obtained by using a low molecular weight polyol described below or a known polyamine compound as an initiator.

Examples of the alkylene oxide include propylene oxide and ethylene oxide. Furthermore, these alkylene oxides can be used alone or in combination of two or more. The polyoxyalkylene polyol contains, for example, a random and/or block copolymer of propylene oxide and ethylene oxide.

Specifically, examples of the polyoxy (C2-3) alkylene polyol include a polyoxyethylene polyol, a polyoxypropylene polyol, and a polyoxyethylene polyoxypropylene copolymer.

Examples of the polytetramethylene ether polyol include polytetramethylene ether glycol. Specifically, examples of the polytetramethylene ether glycol include a ring-opening polymerization product produced by cationic polymerization of tetrahydrofuran (crystalline polytetramethylene ether glycol), and amorphous (non-crystalline) polytetramethylene ether glycol produced by copolymerization of a polymerization unit, such as tetrahydrofuran, with alkyl-substituted tetrahydrofuran and a dihydric alcohol described below. Amorphous (non-crystalline) means being in a liquid state at a normal temperature (25°C).

As the polyether polyol, preferably polytetramethylene ether polyol is used. As the polyether polyol, more preferably polytetramethylene ether glycol is used.

Examples of the polyester polyol include a condensed polyester polyol and a ring-opening polyester polyol. Examples of the condensed polyester polyol include an adipate-based polyester polyol and a phthalic acid-based polyester polyol. Examples of the ring-opening polyester polyol include a lactone-based polyester polyol. More specifically, examples thereof include a polycaproctone polyol.

As the polyester polyol, preferably a ring-opening polyester polyol is used. As the polyester polyol, more preferably a polycaprolactone polyol is used.

As the high molecular weight polyol, more preferably a polyether polyol is used. That is, the high molecular weight polyol more preferably consists of a polyether polyol.

These high molecular weight polyols can be used alone or in combination of two or more.

The high molecular weight polyol has a hydroxyl value of, for example, 30 mgKOH/g or more, preferably 50 mgKOH/g or more, and, for example, 200 mgKOH/g or less, preferably 150 mgKOH/g or less, more preferably 100 mgKOH/g or less, even more preferably 80 mgKOH/g or less.

The content ratio of the high molecular weight polyol with respect to the polyol component is, for example, 90.00% by mass or more, preferably 95.00% by mass or more, more preferably 98.00% by mass or more, even more preferably 99.00% by mass or more, and, for example, 99.95% by mass or less, preferably 99.90% by mass or less.

(Low Molecular Weight Polyol)

The low molecular weight polyol is a compound having two or more hydroxy groups, and has a number average molecular weight of, for example, less than 400, preferably 300 or less.

The low molecular weight polyol contains a 1, 4-butanediol as an essential component.

The content ratio of the 1, 4-butanediol with respect to the low molecular weight polyol is, for example, 80% by mass or more, preferably 90% by mass or more, more preferably 99% by mass or more, even more preferably 100% by mass.

The low molecular weight polyol contains another low molecular weight polyol as an optional component.

Examples of the other low molecular weight polyol include a dihydric alcohol (except a 1, 4-butanediol), a trihydric alcohol, and a tetrahydric or more alcohol.

Examples of the dihydric alcohol include a straight-chain dihydric alcohol and a branched dihydric alcohol.

Examples of the straight-chain dihydric alcohol include a straight-chain dihydric alcohol having 2 or more and 6 or less carbon atoms. Examples of the straight-chain dihydric alcohol having 2 or more and 6 or less carbon atoms include an ethylene glycol, a 1,3-propanediol, a 1,5-pentanediol, and a 1,6-hexanediol.

Examples of the branched dihydric alcohol include a branched dihydric alcohol having 3 or more and 6 or less carbon atoms. Examples of the branched dihydric alcohol having 3 or more and 6 or less carbon atoms include a 1,2-propanediol, a 1,3-the butanediol, a 1,2-butanediol, a neopentyl glycol, and a 3-methyl-1,5-pentanediol.

Examples of the trihydric alcohol include glycerin and trimethylol propane.

Examples of the tetrahydric or more alcohol include pentaerythritol and diglycerin.

The content ratio of the other low molecular weight polyol with respect to the low molecular weight polyol is, for example, 20% by mass or less, preferably 10% by mass or less, and, for example, 1% by mass or more.

These other low molecular weight polyols can be used alone or in combination of two or more.

Preferably, the low molecular weight polyol does not contain another low molecular weight polyol, and consists of a 1, 4-butanediol.

The content ratio of the low molecular weight polyol with respect to the polyol component is, for example, 0.05% by mass or more, preferably 0.10% by mass or more, and, for example, 10.00% by mass or less, preferably 5.00% by mass or less, more preferably 2.00% by mass or less, even more preferably 1.00% by mass or less.

The content ratio of the low molecular weight polyol with respect to 100 parts by mass of the high molecular weight polyol is, for example, 0.05 parts by mass or more, more preferably 0.10 parts by mass or more, even more preferably 0.15 parts by mass or more, and, for example, 1.50 parts by mass or less, preferably 1.00 parts by mass or less, more preferably 0.50 parts by mass or less, even more preferably 0.30 parts by mass or less, particularly preferably 0.20 parts by mass or less.

When the content ratio of the low molecular weight polyol is the above-described lower limit or more, the transparency can be improved.

Furthermore, when the content ratio of the low molecular weight polyol is the above-described upper limit or less, the viscosity of the isocyanate group-terminated prepolymer can be reduced and the handleability thereof is improved.

As detailed below, the isocyanate group-terminated prepolymer is obtained by reacting the polyisocyanate component with the polyol component.

<Curing Agent>

Examples of the curing agent include a compound containing two or more active hydrogen groups containing active hydrogen (for example, a hydroxyl group and an amino group), and example thereof include a hydroxyl group-containing compound and a polyamine.

Examples of the hydroxyl group-containing compound include a 1, 4-butanediol and the other low molecular weight polyols described above.

As the other low molecular weight polyol, preferably a trihydric alcohol is used. As the other low molecular weight polyol, more preferably trimethylol propane is used.

Examples of the polyamine include an aliphatic diamine, an alicyclic diamine, an aromatic diamine and another diamine.

Examples of the aliphatic diamine include an ethylene diamine, a 1,3-propane diamine, a 1,3- or 1,4-butane diamine, and a 1,6-hexamethylene diamine.

Examples of the alicyclic diamine include a 1,4-cyclohexane diamine, a 3-aminomethyl-3,5,5-trimethyl cyclohexylamine (isophorone diamine), a 4,4'-dicyclohexylmethane diamine, a 2,5(2,6)-bis(aminomethyl)bicyclo[2.2.1]heptane, and 1,3-bis(aminomethyl)cyclohexane.

Examples of the aromatic diamine include an o, m or p-tolylenediamine (TDA, OTD), a 3,3'-dichloro-4,4'-diaminodiphenylmethane (MOCA), a 3,5-bis(methylthio)-2,6-toluene diamine, and a 3,5-bis(methylthio)-2,4-toluene diamine.

Examples of another diamine include hydrazine.

As the curing agent, preferably a hydroxyl group-containing compound is used.

More preferably, the curing agent contains a 1, 4-butanediol.

The content ratio of the 1, 4-butanediol with respect to the curing agent is, for example, 80% by mass or more, preferably 90% by mass or more, more preferably 95% by mass or more, even more preferably 100% by mass.

The curing agent may contain the other low molecular weight polyol described above together with a 1, 4-butanediol. When the curing agent contain another low molecular weight polyol, the transparency can be improved.

The content ratio of the other low molecular weight polyol with respect to the curing agent is, for example, 20% by mass or less, preferably 10% by mass or less, and, for example, 1% by mass or more, preferably 5% by mass or more.

As described above, when the curing agent contains the other low molecular weight polyol, the transparency can be improved. Meanwhile, when the curing agent contains the other low molecular weight polyol, the mechanical strength tends to decrease.

Thus, from the viewpoint of the transparency, the curing agent contains a 1, 4-butanediol and the other low molecular weight polyol, and from the viewpoint of the mechanical strength, the curing agent does not contain the other low molecular weight polyol, and consists of a 1, 4-butanediol.

Furthermore, as described above, the polyol component of the isocyanate group-terminated prepolymer preferably contains a 1, 4-butanediol as the low molecular weight polyol, and the curing agent contains a 1, 4-butanediol.

That is, both the low molecular weight polyol as the polyol component of the isocyanate group-terminated prepolymer and the curing agent contain a 1, 4-butanediol. In this manner, the transparency can further be improved.

<Method of Producing Polyurethane Elastomer >

The method of producing a polyurethane elastomer is a prepolymer method, and includes a first step of reacting a polyisocyanate component with a polyol component to produce an isocyanate group-terminated prepolymer, and a second step of reacting the isocyanate group-terminated prepolymer and a curing agent to produce a polyurethane elastomer.

[First Step]

In the first step, the polyisocyanate component and the polyol component are reacted in a predetermined ratio to produce an isocyanate group-terminated prepolymer.

The blending ratio of the polyisocyanate component to the polyol component is adjusted so that the isocyanate group is in excess of the hydroxyl group. More specifically, with respect to the hydroxyl group in the polyol component, the equivalent ratio (isocyanate group/ hydroxyl group) of the isocyanate group in the polyisocyanate component is, for example, 1.5 or more, preferably 1.8 or more, more preferably 2 or more, even more preferably 2.5 or more, and, for example, 10 or less.

Examples of the polymerization method include bulk polymerization and solution polymerization. As the polymerization method, preferably bulk polymerization is used.

In bulk polymerization, for example, the polyisocyanate component and the polyol component are reacted under a nitrogen atmosphere.

The reaction temperature is preferably lower than the reaction temperature (the reaction temperature in the reaction of the isocyanate group-terminated prepolymer with the curing agent) in the second step described below, and is, for example, 50°C or more, preferably 70°C or more, and, for example, 100°C or less.

Furthermore, the reaction time is, for example, 0.5 hours or more, preferably 1 hour or more, and, for example, 15 hours or less.

Furthermore, in the above-described reaction, as necessary, a known urethane-forming catalyst (for example, amines and an organometallic compound (dibutyltin dilaurate)) may be blended in an appropriate ratio. The adding ratio of the urethane-forming catalyst is appropriately set depending on the purpose and use.

Furthermore, in the above-described reaction, as necessary, an additive (for example, an antioxidant, a heat-resistant stabilizer, an antifoaming agent) may be blended in an appropriate ratio.

In this manner, a reaction mixture containing an isocyanate group-terminated prepolymer is produced.

The reaction mixture containing an isocyanate group-terminated prepolymer has an isocyanate group concentration of, for example, 1% by mass or more, preferably 3% by mass or more, and, for example, 30% by mass or less, preferably 10% by mass or less, more preferably 5% by mass or less. The isocyanate group concentration (the content percentage of the isocyanate group) is obtained by using a known method, such as a titration method with di-n-butylamine or an FT-IR analysis.

Furthermore, the above-described reaction mixture may contain an unreacted polyisocyanate component (an isocyanate monomer) in addition to the isocyanate group-terminated prepolymer. As necessary, the unreacted polyisocyanate component is removed from the reaction mixture by a known removal method. Examples of the removal method include a distillation method and an extraction method.

[Second Step]

In the second step, the isocyanate group-terminated prepolymer (the reaction mixture containing an isocyanate group-terminated prepolymer) and a curing agent are reacted to produce a polyurethane elastomer.

To react the isocyanate group-terminated prepolymer (the reaction mixture containing an isocyanate group-terminated prepolymer) with the curing agent, first, the isocyanate group-terminated prepolymer (the reaction mixture containing an isocyanate group-terminated prepolymer) and the curing agent are mixed in a predetermined ratio, and thereafter, as necessary, vacuum defoaming is carried out to prepare a mixture of the isocyanate group-terminated prepolymer and the curing agent.

The blending ratio of the isocyanate group-terminated prepolymer to the curing agent is, for example, as the equivalent ratio (isocyanate group/hydroxyl group) of the isocyanate group in the isocyanate group-terminated prepolymer with respect to the hydroxyl group of the curing agent (the low molecular weight polyol), is, for example, 0.75 or more, preferably 0.9 or more, and, for example, 1.3 or less, preferably 1.2 or less.

In the mixing thereof, the mixing temperature is, for example, 50°C or more, preferably 70°C or more, and, for example, 100°C or less.

Next, the mixture of the isocyanate group-terminated prepolymer and the curing agent is cured (reacted) in a forming mold preliminarily heated, and then demolded. In this manner, a polyurethane elastomer molded in a desired shape is obtained.

The reaction temperature is preferably higher than the reaction temperature of the reaction of the polyisocyanate component with the polyol component in the above-described first step, and, for example, more than 100°C, preferably 105°C or more, and, for example, 200°C or less, preferably 150°C or less, more preferably 120°C or less.

Furthermore, the reaction time is, for example, 0.5 hours or more, preferably 1 hour or more, and, for example, 15 hours or less.

Thereafter, the polyurethane elastomer can be aged. The aging temperature is, for example, 10°C or more, preferably 20°C or more, and, for example, 50°C or less, preferably 40°C or less. Furthermore, the aging time is, for example, 1 hour or more, preferably 10 hours or more, and, for example, 20 days or less, preferably 10 days or less.

In this manner, a polyurethane elastomer containing the reaction product of the isocyanate group-terminated prepolymer with the curing agent is produced.

Furthermore, as necessary, the polyurethane elastomer can contain a known additive in addition to the reaction product of the isocyanate group-terminated prepolymer with the curing agent. In other words, the polyurethane elastomer may be a polyurethane elastomer composition.

Examples of the additive include an antioxidant, a heat-resistant stabilizer, an ultraviolet absorber, a light-resistant stabilizer, an antiblocking agent, a mold release agent, a pigment, a dye, a lubricant, a filler, a hydrolysis inhibitor, an antirust agent, and a bluing agent. The added amount of the additive and the timing of the addition are appropriately set depending on the purpose and use.

The polyurethane elastomer has a urethane group concentration of, for example, 1.3 mmol/g or more, preferably 1.6 mmol/g or more, more preferably 1.8 mmol/g or more, and, for example, 2.5 mmol/g or less, preferably 2.0 mmol/g or less.

When the urethane group concentration of the polyurethane elastomer is the above-described lower limit or more, the mechanical strength can be improved.

Furthermore, when the urethane group concentration of the polyurethane elastomer is the above-described upper limit or less, the transparency can be improved.

In detail, the urethane group concentration of the polyurethane elastomer is an index of the hard segment in the polyurethane elastomer. When the urethane group concentration of the polyurethane elastomer increases, the mechanical strength is improved, but the transparency tends to decrease. On the other hand, when the urethane group concentration of the polyurethane elastomer decreases, the transparency is improved, and the mechanical strength tends to increase. In other words, there is a trade-off between the transparency and the mechanical strength.

When the urethane group concentration of the polyurethane elastomer falls within the above-described range, the transparency and the mechanical strength can simultaneously be achieved.

The urethane group concentration can be measured in accordance with Examples described below.

The polyurethane elastomer has a haze of, for example, 80% or less, preferably 60% or less, more preferably 40% or less from the viewpoint of the transparency.

The method of measuring the haze is detailed in Examples described below.

Then, the polyurethane elastomer is produced as TPU (thermoplastic polyurethane resin) or TSU (thermosetting polyurethane resin). Preferably, the polyurethane elastomer is produced as TSU (thermosetting polyurethane resin). The polyurethane elastomer is molded by a known molding method.

Examples of the molding method include cast molding, thermal compression molding, injection molding, extrusion molding, and spinning molding. Furthermore, examples of the shape after the molding include a board shape, a fiber shape, a strand shape, a film shape, a sheet shape, a pipe shape, a bolt shape, a hollow shape, a box shape, and a button shape.

As the molding method, preferably cast molding is used. Therefore, the polyurethane elastomer is preferably a cast molded polyurethane elastomer. The cast molded polyurethane elastomer is a molded article produced by cast molding (cast molded product), and a product solely having a predetermined shape depending on the purpose and use, and is distinguished from a coating agent applied to an object to be coated.

More specifically, in cast molding, preferably the isocyanate group-terminated prepolymer and the curing agent are mixed and a mixture thereof is prepared. Next, the above-described mixture is defoamed as necessary, and supplied to a forming mold preliminarily heated. In this manner, the mixture is heated and cured in the forming mold. In this manner, a polyurethane elastomer (molded product) molded in a desired shape is obtained.

Examples of the uses of the molded product include, for example, transparent rigid plastics, coating materials, pressure-sensitive adhesives, adhesives, waterproof materials, potting agents, inks, binders, films, sheets, bands, belts, tubes, blades, loudspeakers, sensors, outsoles, threads, fibers, non-woven fabrics, cosmetic products, items of shoes, heat insulators, seal materials, tape materials, sealing materials, photovoltaic components, robot components, android components, wearable components, items of clothing, hygiene products, cosmetic items, furniture products, components for food-packaging, sports items, leisure items, medical products, nursing care products, house components, audio components, lighting components, vibration-proof components, acoustic insulation components, daily use items, sundry items, cushions, bedclothes, stress absorbers, stress relaxation materials, car interior materials, car exterior materials, components for railway, aircraft components, optical elements, components for office automation equipment, sundry item-surface protection materials, sealing materials for semiconductors, self-repairing materials, health appliances, lenses for eyeglasses, toys, packings, cable sheaths, wire harnesses, electrical communication cables, wiring for vehicles, computer wiring, industry products, shock absorbers, and semiconductor products.

<Operations and Effects>

The polyurethane elastomer contains the reaction product of the isocyanate group-terminated prepolymer with the curing agent. Furthermore, the polyol component of the isocyanate group-terminated prepolymer contains a low molecular weight polyol, and, the low molecular weight polyol contains a 1, 4-butanediol. Therefore, the transparency can be improved.

The method of producing the polyurethane elastomer include the first step of reacting the polyisocyanate component with the polyol component to produce an isocyanate group-terminated prepolymer, and the second step of reacting the isocyanate group-terminated prepolymer with a curing agent to produce a polyurethane elastomer. Furthermore, the polyol component contains a low molecular weight polyol containing a 1, 4-butanediol. Therefore, the transparency can be improved.

[Examples]

Next, the present invention is described based on Examples and Comparative Examples. The present invention is, however, not limited to them. The "parts" and "%" are based on mass unless otherwise specified. The specific numeral values used in the description below, such as mixing ratios (content ratios), physical property values, and parameters, can be replaced with the corresponding mixing ratios (content ratios), physical property values, and parameters in the above-described "DESCRIPTION OF THE EMBODIMENTS", including the upper limit values (numeral values defined with "or less", and "less than") or the lower limit values (numeral values defined with "or more", and "more than").

<Details of Components>

1,4-$H_6$XDI: 1,4-bis(isocyanatomethyl)cyclohexane, trade name; FORTIMO 1,4$H_6$XD, a content ratio of trans-1,4-bis(isocyanatomethyl)cyclohexane 86% by mole, a content ratio of cis-1,4-bis(isocyanatomethyl)cyclohexane 14% by mole

4,4'-MDI: 4,4'-diphenylmethane diisocyanate, trade name; COSMONATE PH, manufactured by Mitsui Chemicals, Inc.

PTMEG#2000 (a number average molecular weight of 2000): polytetramethylene ether glycol, trade name; PTMG2000, a hydroxyl value = 56.1 mgKOH/g, manufactured by Mitsubishi Chemical Corporation

PTMEG#1400 (a number average molecular weight of 1400): polytetramethylene ether glycol, trade name; PTG1400SN, a hydroxyl value = 80.1 mgKOH/g, manufactured by Hodogaya Chemical Co., LTD.

PTMEG#3000 (a number average molecular weight of 3000): polytetramethylene ether glycol, trade name; PTMG3000, a hydroxyl value = 37.4 mgKOH/g, manufactured by Mitsubishi Chemical Corporation

PCL#2000 (a number average molecular weight of 2000): polycaprolactone polyol, trade name; PLACCEL220N, a hydroxyl value = 56.1 mgKOH/g, manufactured by Daicel Corporation

1,4-BD: 1, 4-butanediol, a number average molecular weight of 90

1,3-BG:1,3-butylene glycol, a number average molecular weight of 90

DEG: diethylene glycol, a number average molecular weight of 106

TMP: trimethylol propane, a number average molecular weight of 134

Antioxidant: trade name "IRGANOX 245", manufactured by BASF Japan Ltd.

Heat-resistant stabilizer: trade name "JPP100", manufactured by Johoku Chemical Co.,Ltd.

Antifoaming agent: trade name "BYK-088", manufactured by BYK Japan KK

<Production of Polyurethane Elastomer>

Example 1

[First Step]

In accordance with the description of Table 1, a polyisocyanate component and a polyol component were charged into a four-neck flask equipped with a reflux cooling tube, a nitrogen inlet tube, a thermometer, and stirrer. Thereafter, 0.15 parts by mass of IRGANOX 245, 0.1 parts by mass of JPP100, and 0.2 parts by mass of BYK-088 were added thereto. Thereafter, dibutyltin dilaurate diluted to 2% by mass with diisononyl adipate in advance was added to the mixture so that the catalyst amount was 5ppm. The polyisocyanate component and the polyol component were reacted under a nitrogen atmosphere at 80°C, thereby producing a reaction mixture containing an isocyanate group-terminated prepolymer.

[Second Step]

The reaction mixture containing an isocyanate group-terminated prepolymer and a curing agent were mixed at 80°C in a ratio in which the equivalent ratio (active hydrogen group/NCO) was 0.95, and were stirred and vacuum defoamed, thereby preparing a mixture of the isocyanate group-terminated prepolymer and the curing agent. Thereafter, the prepared mixture was poured into a forming mold (in a sheet shape with a thickness of 2 mm, a button shape with a diameter of 29 mm × a thickness of 12 mm) of which temperature was adjusted to 110°C in advance, and cured in an oven at 110°C for 2 hours. Thereafter, the cured product was demolded from the forming mold. The resulting demolded product was subjected to an annealing treatment in an oven at 110°C for 14 hours, and thereafter aged under constant temperature and humidity conditions of a room temperature of 23°C and a relative humidity of 55% for 7 days, thereby producing a sheet-shaped polyurethane elastomer.

Examples 2 to 9 and Comparative Examples 1 to 4

Except that the formulation of each component was changed in accordance with Table 1, a sheet-shaped polyurethane elastomer was produced in the same manner as Example 1. In Table 1, the numerical values of the components are expressed in units of parts by mass.

Furthermore, in Comparative Example 1, dibutyltin dilaurate was not blended in the first step.

<Evaluations>

[Isocyanate Group Concentration]

The isocyanate group concentration of the reaction mixture containing an isocyanate group-terminated prepolymer of each of Examples and Comparative Examples was measured. Specifically, by using a potentiometric titrator in an n-dibutylamine method in conformity with JIS K-1556 (2006), the isocyanate group concentration of the isocyanate group-terminated prepolymer was measured. The results are shown in Table 1.

[Urethane Group Concentration]

The urethane group concentration of the polyurethane elastomer of each of Examples and Comparative Examples was measured. Specifically, on the assumption that all the isocyanate groups in the polyisocyanate component that was the raw material of the polyurethane elastomer were converted into urethane groups, the urethane group concentration was calculated according to the following calculation formula. The results are shown in Table 1.

[the number of the isocyanate groups (mmol) in the polyisocyanate component that is the raw material of the polyurethane elastomer]/[the weight of the polyurethane elastomer (g)]

[Transparency (Haze Measurement)]

The haze of the polyurethane elastomer of each of Examples and Comparative Examples was measured. Specifically, Haze Meter (manufactured by NIPPON DENSHOKU INDUSTRIES CO., LTD., Model: NDH 2000) was used to measure the haze of the polyurethane elastomer with a thickness of 2 mm. The results are shown in Table 1.

[Hardness]

The hardness of the polyurethane elastomer of each of Examples and Comparative Examples was measured. Specifically, in conformity with JIS K7311 (1995), an ASKER A hardness meter was horizontally pressed against the polyurethane elastomer with a thickness of 12 mm, and the stable value of the needle after 15 seconds was read. The results are shown in Table 1.

[Viscosity of Reaction Mixture Containing Isocyanate Group-terminated Prepolymer]

The viscosity of the reaction mixture containing an isocyanate group-terminated prepolymer of each of Examples and Comparative Examples was measured. Specifically, the viscosity was measured in conformity with JIS K 5600-2-3 (2014) in a cone and plate method at a temperature of 80°C with a 40P plate at a speed of revolution of 188 rpm. The results are shown in Table 1.

[Table 1]

Table 1

| Ex. · Comp. Ex. No. | | | | Ex. 1 | Comp. Ex. 1 | Ex. 2 | Ex. 3 | Ex. 4 | Comp. Ex. 2 | Comp. Ex. 3 | Ex. 5 | Ex. 6 | Comp. Ex. 4 | Ex. 7 | Ex. 8 | Ex. 9 |
|---|---|---|---|---|---|---|---|---|---|---|---|---|---|---|---|---|
| Isocyanate group-terminated prepolymer | Polyisocyanate component | | 1.4-$H_6$XDI | 24.0 | - | 23.5 | 24.4 | 24.0 | 24.0 | 24.0 | 24.0 | 24.0 | 24.0 | 31.5 | 17.7 | 24.0 |
| | | | 4,4'-MDI | - | 63.4 | - | - | - | - | - | - | - | - | - | - | - |
| | Polyol component | High molecular weight polyol | PTMEG#2000 | 100 | 100 | - | - | - | 100 | 100 | 100 | 100 | 100 | 100 | 100 | 100 |
| | | | PTMEG#1400 | - | - | 100 | - | - | - | - | - | - | - | - | - | - |
| | | | PTMEG#3000 | - | - | - | 100 | - | - | - | - | - | - | - | - | - |
| | | | PCL#2000 | - | - | - | - | 100 | - | - | - | - | - | - | - | - |
| | | Low molecular weight polyol | 1,4-BD | 0.19 | 0.19 | 0.27 | 0.13 | 0.19 | - | - | 1.13 | 0.09 | - | 0.19 | 0.19 | 0.19 |
| | | | 1,3-BG | - | - | - | - | - | - | 0.19 | - | - | - | - | - | - |
| | | | DEG | - | - | - | - | - | 0.22 | - | - | - | - | - | - | - |
| | Isocyanate group concentration of isocyanate group-terminated prepolymer | | | 4.8 | 10.3 | 3.2 | 6.1 | 4.8 | 4.8 | 4.8 | 4.1 | 4.9 | 5.0 | 7.0 | 2.8 | 4.8 |
| Curing agent | | | 1,4-BD | 6.1 | 17.2 | 4.0 | 7.8 | 6.1 | 6.1 | 6.1 | 5.2 | 6.2 | 6.3 | 9.4 | 3.3 | 5.5 |
| | | | TMP | - | - | - | - | - | - | - | - | - | - | - | - | 0.6 |
| Urethane group concentration (mmol/g) | | | | 1.9 | 2.8 | 1.9 | 1.9 | 1.9 | 1.9 | 1.9 | 1.9 | 1.9 | 1.9 | 2.3 | 1.5 | 1.9 |
| Evaluations | Transparency | Haze (%) | | 46 | 98 | 32 | 68 | 53 | 90 | 92 | 10 | 63 | 88 | 66 | 20 | 25 |
| | Hardness | | | 90 | 90 | 89 | 92 | 90 | 90 | 89 | 90 | 90 | 90 | 93 | 86 | 86 |
| | Viscosity of isocyanate group-terminated prepolymer (mPa·s) | | | 1940 | 860 | 3380 | 1910 | 1920 | 1920 | 1900 | 3270 | 1380 | 1110 | 810 | 4030 | 1940 |

EP 4 759 856 A1

11

While the illustrative embodiments of the present invention are provided in the above-described description, such is for illustrative purpose only and it is not to be construed as limiting in any manner. Modification and variation of the present invention that will be obvious to those skilled in the art is to be covered by the following claims.

Industrial Applicability

The polyurethane elastomer of the present invention and the method of producing a polyurethane elastomer of the present invention can be preferably used, for example, for the production of transparent rigid plastics, coating materials, pressure-sensitive adhesives, adhesives, waterproof materials, potting agents, inks, binders, films, sheets, bands, belts, tubes, blades, loudspeakers, sensors, outsoles, threads, fibers, non-woven fabrics, cosmetic products, items of shoes, heat insulators, seal materials, tape materials, sealing materials, photovoltaic components, robot components, android components, wearable components, items of clothing, hygiene products, cosmetic items, furniture products, components for food-packaging, sports items, leisure items, medical products, nursing care products, house components, audio components, lighting components, vibration-proof components, acoustic insulation components, daily use items, sundry items, cushions, bedclothes, stress absorbers, stress relaxation materials, car interior materials, car exterior materials, components for railway, aircraft components, optical elements, components for office automation equipment, sundry item-surface protection materials, sealing materials for semiconductors, self-repairing materials, health appliances, lenses for eyeglasses, toys, packings, cable sheaths, wire harnesses, electrical communication cables, wiring for vehicles, computer wiring, industry products, shock absorbers, and semiconductor products.

**Claims**

1. A polyurethane elastomer comprising: a reaction product of an isocyanate group-terminated prepolymer with a curing agent,

   wherein the isocyanate group-terminated prepolymer contains a reaction product of

   a polyisocyanate component containing bis(isocyanatomethyl)cyclohexane with
   a polyol component containing a high molecular weight polyol and a low molecular weight polyol, and

   wherein the low molecular weight polyol contains a 1, 4-butanediol.

2. The polyurethane elastomer according to claim 1,

   wherein the high molecular weight polyol has a number average molecular weight of 400 or more, and
   wherein the low molecular weight polyol has a number average molecular weight of less than 400.

3. The polyurethane elastomer according to claim 1,
   wherein the high molecular weight polyol has a number average molecular weight of 1200 or more and 3200 or less.

4. The polyurethane elastomer according to claim 1,
   wherein a content ratio of the low molecular weight polyol with respect to 100 parts by mass of the high molecular weight polyol is 0.05 parts by mass or more and 1.50 parts by mass or less.

5. The polyurethane elastomer according to claim 1, having a urethane group concentration of 1.3 mmol/g or more and 2.5 mmol/g or less.

6. The polyurethane elastomer according to claim **1,** having a haze of 80% or less.

7. The polyurethane elastomer according to any one of claims 1 to 6,

   wherein the curing agent contains a **1,** 4-butanediol, and
   wherein a content ratio of the **1,** 4-butanediol with respect to the curing agent is 80% by mass or more.

8. A method of producing a polyurethane elastomer, the method comprising:

   a first step of reacting a polyisocyanate component with a polyol component to produce an isocyanate group-terminated prepolymer; and

a second step of reacting the isocyanate group-terminated prepolymer with a curing agent to produce a polyurethane elastomer,

wherein the polyisocyanate component contains bis(isocyanatomethyl)cyclohexane,

wherein the polyol component contains a high molecular weight polyol and a low molecular weight polyol, and

wherein the low molecular weight polyol contains a **1,** 4-butanediol.

## INTERNATIONAL SEARCH REPORT

| International application No. |
|---|
| **PCT/JP2024/027506** |

**A. CLASSIFICATION OF SUBJECT MATTER**

*C08G 18/75*(2006.01)i; *C08G 18/12*(2006.01)i; *C08G 18/65*(2006.01)i
FI:   C08G18/75 010; C08G18/12; C08G18/65 011

According to International Patent Classification (IPC) or to both national classification and IPC

**B. FIELDS SEARCHED**

Minimum documentation searched (classification system followed by classification symbols)

C08G18/00-18/87

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2015-101625 A (TOYOPOLYMER CO., LTD.) 04 June 2015 (2015-06-04) claims, column "examples" (for example, paragraph [0122]), etc. | 1-6, 8 |
| A | | 7 |
| X | WO 2014/208643 A1 (UBE INDUSTRIES, LTD.) 31 December 2014 (2014-12-31) claims, column "examples" (for example, example 1), etc. | 1-6, 8 |
| A | | 7 |
| X | JP 2000-143971 A (ASAHI DENKA KOGYO KK) 26 May 2000 (2000-05-26) claims, column "examples" (for example, example 2), etc. | 1-6, 8 |
| A | | 7 |
| X | JP 3-237173 A (TAKEDA PHARMACEUTICAL COMPANY LIMITED.) 23 October 1991 (1991-10-23) claims, column "examples" (for example, reference example 7), etc. | 1-6, 8 |
| A | | 7 |

☑ Further documents are listed in the continuation of Box C.　　☑ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
|---|---|
| **10 October 2024** | **22 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**EP 4 759 856 A1**

## INTERNATIONAL SEARCH REPORT

| International application No. |
|---|
| **PCT/JP2024/027506** |

### C. DOCUMENTS CONSIDERED TO BE RELEVANT

| Category* | Citation of document, with indication, where appropriate, of the relevant passages | Relevant to claim No. |
|---|---|---|
| X | CN 110467712 A (CHINA BUILDING MATERIALS ACADEMY) 19 November 2019 (2019-11-19) claims, column "examples" (for example, example 9), etc. | 1-6, 8 |
| A | | 7 |
| A | JP 47-34940 A (TAKEDA PHARMACEUTICAL COMPANY LIMITED.) 22 November 1972 (1972-11-22) | 1-8 |
| A | JP 2000-297130 A (MITSUBISHI GAS CHEMICAL COMPANY, INC.) 24 October 2000 (2000-10-24) | 1-8 |
| A | JP 2006-504843 A (DOW GLOBAL TECHNOLOGIES, INC.) 09 February 2006 (2006-02-09) | 1-8 |
| A | JP 2011-516692 A (DOW GLOBAL TECHNOLOGIES LIMITED LIABILITY COMPANY) 26 May 2011 (2011-05-26) | 1-8 |
| A | JP 2010-285603 A (MITSUI CHEMICALS, INC.) 24 December 2010 (2010-12-24) | 1-8 |
| A | JP 2010-280884 A (MITSUI CHEMICALS, INC.) 16 December 2010 (2010-12-16) | 1-8 |
| A | JP 2014-37505 A (MITSUI CHEMICALS, INC.) 27 February 2014 (2014-02-27) | 1-8 |
| P, A | WO 2023/153397 A1 (MITSUI CHEMICALS, INC.) 17 August 2023 (2023-08-17) | 1-8 |

Form PCT/ISA/210 (second sheet) (July 2022)

15

International application No.

**PCT/JP2024/027506**

| Patent document cited in search report | | | Publication date (day/month/year) | Patent family member(s) | | | Publication date (day/month/year) |
|---|---|---|---|---|---|---|---|
| JP | 2015-101625 | A | 04 June 2015 | (Family: none) | | | |
| WO | 2014/208643 | A1 | 31 December 2014 | (Family: none) | | | |
| JP | 2000-143971 | A | 26 May 2000 | (Family: none) | | | |
| JP | 3-237173 | A | 23 October 1991 | (Family: none) | | | |
| CN | 110467712 | A | 19 November 2019 | (Family: none) | | | |
| JP | 47-34940 | A | 22 November 1972 | (Family: none) | | | |
| JP | 2000-297130 | A | 24 October 2000 | US | 6262296 | B1 | |
| | | | | EP | 1044998 | A1 | |
| JP | 2006-504843 | A | 09 February 2006 | US | 2004/0087754 | A1 | |
| | | | | WO | 2004/041899 | A1 | |
| | | | | KR | 10-2005-0065658 | A | |
| | | | | CN | 1708527 | A | |
| | | | | TW | 200422314 | A | |
| JP | 2011-516692 | A | 26 May 2011 | US | 2011/0028642 | A1 | |
| | | | | WO | 2009/126707 | A1 | |
| | | | | CN | 102056957 | A | |
| JP | 2010-285603 | A | 24 December 2010 | (Family: none) | | | |
| JP | 2010-280884 | A | 16 December 2010 | JP | 2010-280883 | A | |
| JP | 2014-37505 | A | 27 February 2014 | (Family: none) | | | |
| WO | 2023/153397 | A1 | 17 August 2023 | CN | 118302467 | A | |

Form PCT/ISA/210 (patent family annex) (July 2022)

**EP 4 759 856 A1**

**Patent documents cited in the description**

- JP 2014231585 A